Europäisches Patentamt

European Patent Office

Office européen des brevets

(19)

(11) Publication number: **0 076 614**
**A1**

# (12) EUROPEAN PATENT APPLICATION

(21) Application number: **82305071.1**

(22) Date of filing: **24.09.82**

(51) Int. Cl.³: **B 01 D 53/34**

(30) Priority: **28.09.81 US 306029**

(43) Date of publication of application:
**13.04.83 Bulletin 83/15**

(84) Designated Contracting States:
**DE FR GB IT NL**

(71) Applicant: **CALGON CARBON CORPORATION**
**Route 60 Campbell's Run Road**
**Robinson Township Pennsylvania 15205(US)**

(72) Inventor: **Fauth, Frederick R.**
**2947 Middletown Road**
**Pittsburgh Pennsylvania 15204(US)**

(72) Inventor: **Bossi, Frank R.**
**207 East Edgewood Road**
**McMurray Pennsylvania 15317(US)**

(72) Inventor: **Palmgren, D. R. Gilbert**
**121 West Prospect Avenue**
**Pittsburgh Pennsylvania 15205(US)**

(74) Representative: **Crampton, Keith John Allen et al,**
**D YOUNG & CO 10 Staple Inn**
**London WC1V 7RD(GB)**

(54) Removal of malodorant compositions from the waste gas streams of a Stretford process.

㉗ Malodorant compositions are removed from the waste gas streams of a Stretford process by reducing the moisture content of the waste gas streams below 100 percent relative humidity; and passing the dried stream through activated carbon impregnated with caustic alkali. The activated carbon may be regenerated by heating it to a temperature sufficient to drive off the gaseous hydrocarbons; soaking it in caustic alkali; washing it with water until 0.5 to 20 weight % of caustic alkali remains; drying the carbon with air to a moisture level of 0 to 30 weight %, and passing the used air through a separate bed of activated carbon.

EP 0 076 614 A1

## REMOVAL OF MALODORANT COMPOSITIONS FROM THE
## WASTE GAS STREAMS OF A STRETFORD PROCESS

The present invention is concerned with the removal of malodorant compositions from the waste gas streams of a Stretford process.

The Stretford process was originally developed by the Northwestern Gas Board of the British Gas Corporation. It is described by Moyes, A.J. and S. Vasan, in "Holmes-Stretford $H_2S$-Removal Process Proved in Use", Oil and Gas Journal, pp 56-58, September 2, 1974; by Moyes, A.J. and J.S. Wilkinson, in "High Efficiency Removal of $H_2S$ from Fuel Gases and Process Gas Streams", Process Engineering, pp 101-105, September 1973; by Moyes, A.J. and J.S. Wilkinson in "The Development of the Stretford Process", W.C. Holmes and Company, Ltd., January, 1973; by Riesenfeld, F.C. and A.L. Kohl in Gas Purification, 2nd Ed., Gulf Publishing Co., Houston, Texas, 1974; and in "Handbook of Gasifiers and Treatment Systems", pp 132-135, prepared for the United States Energy Research and Development Administration by Dravo Corporation, February, 1976. The process primarily removes hydrogen sulfide from natural gas streams by chemical absorption, and it is the main process used to remove hydrogen sulfide from the natural gas resulting from high-yield oil wells. By "natural gas" is meant any natural gases, whether naturally occurring or synthetically produced.

The Stretford process is very effective at removing the hydrogen sulfide, but the residual mercaptans and some hydrocarbons are not entirely removed in the treatment process, which involves adsorption on carbon. Consequently, there is a distinct garlic-like odor associated with the Stretford process, the principal malodorants being the mercaptans. The waste gas streams of Stretford processes are at present vented to the air.

A number of improvements and refinements have been made in the basic Stretford process by various firms and have been applied to commercial gas purification operations. Over 50 plants are currently in operation, world-wide, purifying refinery gas, producer gas, coal gas, synthesis gas and coke oven gas. The waste gas streams coming off the Stretford process are super-saturated with water. It has unexpectedly been found that carbon saturated with moisture often results in breakthrough, even though the carbon is not spent. The present invention is based on the discovery that the moisture content of the waste gas streams must be reduced below 100 percent relative humidity in order to obtain the full usage of the carbon.

The present invention provides a process for the removal of malodorant compositions from the waste gas streams of a Stretford process, comprising reducing the moisture content of the waste gas stream below 100 percent relative humidity, and passing the resulting dried stream through activated carbon impregnated with caustic alkali.

Although the present invention is concerned with removing the malodorant mercaptans, hydrocarbons are also removed by the process. The malodorous compounds whose removal is enhanced by use of the method and product of the present invention comprise those malodorant compositions detectable by use of dynamic olfactometer devices and procedures, for example those described in Operating and Reference Manual: Dynamic Olfactometer Model 1000, Chicago Scientific Inc., Bensenville, Illinois (1974), or equivalent devices and procedures.

The gas streams coming off the Stretford process are above 100 percent relative humidity, so that positive steps to reduce that relative humidity are necessary. The carbon will not allow premature odor breakthrough if the relative humidity is reduced below 100 percent, preferably 50 to 95 percent, particularly 60 to 95 percent. The reduction of relative humidity is preferably accomplished by passing the gas stream through a demister and heat exchanger. The waste gas streams of the Stretford process are usually at about 100°F (38°C). The activated carbon may be impregnated with any caustic alkali. Potassium hydroxide and sodium hydroxide are the most commonly available; sodium hydroxide is preferred. U.S. Patent US-A-4,072,479 describes carbon impregnated with sodium hydroxide.

The invention also provides a method of regenerating the spent carbon used in removing the malodorant compositions, comprising heating the activated carbon to a temperature sufficient to drive off the gaseous hydrocarbons; soaking it in caustic alkali; washing it with water until 0.5 to 20 weight % of caustic alkali remains; drying the carbon with air to a moisture level of 0 to 30 weight %, and passing the used air through activated carbon.

The activated carbon is heated, preferably with steam, to preferably a temperature of 200 to 270°F (93 to 139°C), typically for about an hour, in order to substantially drive off the gaseous hydrocarbons. After heating, the carbon is soaked with caustic alkali. It is preferred to use a two-step soaking process, in which the carbon is soaked for a minimum of 10 hours and at least 40 percent caustic alkali, and then drained and resoaked for a minimum of 4 hours, preferably a minimum of 6 hours, in 5 to 30 percent caustic alkali. The caustic alkali in each stage is preferably sodium hydroxide. The carbon is then rinsed with water to reduce the residual caustic to 0.5 to 20 weight %. The carbon is subsequently dried, preferably with hot air heated to 70 to 120°F (21 to 49°C) to a moisture level of 0 to 30 weight %. The air used in the drying step is passed through a separate bed of activated carbon.

The activated carbon used in the invention may be a single bed or a series of carbon beds. The carbon is preferably granular and of the type disclosed in U.S. Patent US-A-4,072,479.

The following examples will serve to better illustrate the treatment and regeneration methods of the present invention. In the examples, percentages are by weight unless otherwise indicated.

### Examples

The waste gas stream from a Stretford process was dried from saturated (100 percent) to 90 percent relative humidity by passing the stream through a demister, followed by passing the stream through a heat exchanger. The gas stream was then passed through a column, 36 inches (914 mm) deep and 5 inches (127 mm) in diameter, of activated carbon impregnated with sodium hydroxide. The gas flow through the test column was set at 70 feet (21.3 m) per minute in order to cause an odor breakthrough as soon as possible. Breakthrough occurred after about 21 hours 30 minutes. The carbon was removed for regeneration. The carbon was steamed at 220°F (104°C) for a little over an hour. The carbon was then soaked in 50 percent sodium hydroxide for 17 hours. The sodium hydroxide was drained and the carbon re-soaked in 15 percent sodium hydroxide for about 6 hours. The carbon was then washed with water until about 7 percent residual sodium hydroxide was retained on the regenerated carbon. The carbon was dried with air heated to 120°F (49°C) until the moisture level was reduced to 20 weight %. The hot air had some odor and was therefore passed through a second carbon column. The air leaving from the second carbon column had no odor.

CLAIMS

1.      A method of removing malodorant compositions from the waste gas streams of a Stretford process, comprising reducing the moisture content of the waste gas stream below 100 percent relative humidity  and  passing the resulting dried stream through activated carbon impregnated with caustic alkali.

2.      A method as claimed in Claim 1, in which the caustic alkali is sodium hydroxide or potassium hydroxide.

3.      A method as claimed in Claim 1 or 2, in which the reducing of moisture content is accomplished by passing the waste gas stream through a demister followed by a heat exchanger.

4.      A method as claimed in any preceding claim in which the moisture content of the waste gas streams is reduced to 50 to 95 percent relative humidity.

5.      A method as claimed in any preceding claim in which the spent carbon is regenerated by heating it to a temperature sufficient to drive off the gaseous hydrocarbons;  soaking the carbon in caustic alkali and then washing it with water until 0.5 to 20 weight % of caustic alkali remains;  drying the carbon with air to a moisture level of 0 to 30 weight % and passing the used air through a separate bed of activated carbon.

6.      A method as claimed in Claim 5, in which the initial heating is done with steam at a temperature of 200 to 270°F. (93 to 139°C) for at least 1 hour.

7.      A method as claimed in Claim 5 or 6, in which the carbon is soaked in at least 40 percent sodium hydroxide and then drained and re-soaked for a minimum of 14 hours in 5 to 30 percent sodium hydroxide.

8.      A method as claimed in any one of Claims 5 to 7, in which the carbon is dried using air heated to 70 to 120°F (21 to 49°C).

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 01 D 53/34 |
| Y | DE-A-2 511 976 (LABORATORIUM FÜR ADSORPTIONSTECHNIK) * page 4, last paragraph - page 9 * | 1,2,4, 5 | |
| | --- | | |
| D,Y | US-A-4 072 479 (R.K. SINHA) * column 14, line 53 - column 16, line 7 * | 1,2,5 | |
| | ----- | | |

**TECHNICAL FIELDS SEARCHED (Int. Cl. ³)**

B 01 D 53/00

The present search report has been drawn up for all claims

| Place of search THE HAGUE | Date of completion of the search 05-01-1983 | Examiner BOGAERTS M.L.M. |
|---|---|---|